# EUROPÄISCHE PATENTANMELDUNG

(11) **EP 1 849 991 A2**
(43) Veröffentlichungstag der Anmeldung: **31.10.2007**
(21) Anmeldenummer: 07105748.3
(22) Anmeldetag: 05.04.2007
(51) Int. Cl.: F02M 51/00, F02M 51/06, F02M 61/16

(54) **Metallischer Körper**

(30) Priorität: 24.04.2006 DE 102006018916
(71) Anmelder: SIEMENS AKTIENGESELLSCHAFT, 80333 München (DE)
(72) Erfinder: Schürz, Willibald, Dr., 93188 Pielenhofen (DE); Simmet, Martin, 93077 Bad Abbach (DE)

(57) **Zusammenfassung**

Ein metallischer Körper hat eine Ausnehmung (14, 14'), durch die ein elektrischer Leiter (12, 12') geführt ist. Der elektrische Leiter (12, 12') ist durch einen Keramikkörper (16, 16') geführt, der mittels einer Hartlötverbindung (18, 18') hochdruckdicht in der Ausnehmung (14, 14') befestigt ist.

## Beschreibung

Die Erfindung betrifft einen metallischen Körper. Ein derartiger metallischer Körper wird bevorzugt als Gehäuse in einem Injektor eingesetzt, der zum Zumessen von Fluid ausgebildet ist.

Immer strengere gesetzliche Vorschriften bezüglich der zulässigen Schadstoff-Emissionen von Brennkraftmaschinen, die in Kraftfahrzeugen angeordnet sind, machen es erforderlich, diverse Maßnahmen vorzunehmen, durch die die Schadstoff-Emissionen gesenkt werden. Ein Ansatzpunkt hierbei ist, die von der Brennkraftmaschine durch den Verbrennungsprozess des Luft-/Kraftstoff-Gemisches erzeugten Schadstoff-Emissionen direkt zu senken. Dies setzt das Zumessen von Kraftstoff unter hohem Druck voraus. Zu diesem Zweck werden Injektoren, die auch als Einspritzventil bezeichnet werden, eingesetzt, deren Stellantrieb als Festkörperaktuator, insbesondere als Piezoaktuator, ausgebildet sind.

Die Aufgabe der Erfindung ist es, einen metallischen Körper zu schaffen, der eine hochdruckfeste Durchführung eines elektrischen Leiters ermöglicht.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch einen metallischen Körper mit einer Ausnehmung, durch die ein elektrischer Leiter geführt ist. Der elektrische Leiter ist durch einen Keramikkörper geführt, der mittels einer Hartlötverbindung hochdruckdicht in der Ausnehmung befestigt ist. Der Einsatz des Keramikkörpers in Verbindung mit der Hartlötverbindung ermöglicht einfach das Realisieren einer hochdruckfesten Durchführung des elektrischen Leiters mit ausreichend hoher Robustheit, insbesondere für den Einsatz bei Fluid-Injektoren mit sehr hohen Drücken.

Gemäß einer vorteilhaften Ausgestaltung der Erfindung umfasst der Keramikkörper eine Oxidkeramik. Oxidkeramiken sind besonders gut geeignet zum Einsatz in dem metallischen Körper aufgrund ihres thermischen Ausdehnungskoeffizienten und ihrer günstigen mechanischen Eigenschaften im Hinblick auf eine Hochdruckbeaufschlagung.

In diesem Zusammenhang ist es vorteilhaft, wenn der Keramikkörper Zirkonoxid umfasst. In diesem Fall ist der thermische Ausdehnungskoeffizient des Keramikkörpers sehr ähnlich dem von Stahl, einem bevorzugten Werkstoff für den metallischen Körper.

Gemäß einer weiteren vorteilhaften Ausgestaltung der Erfindung umfasst die Hartlotverbindung ein Lot, das Silber und Titan umfasst. Dies ist besonders gut geeignet zum Herstellen einer hochwertigen Hartlötverbindung zwischen dem Keramikkörper und dem metallischen Körper.

In diesem Zusammenhang ist es besonders vorteilhaft, wenn das Lot Kupfer umfasst. Dann ist es besonders gut geeignet zum Herstellen einer hochwertigen Hartlötverbindung zwischen dem metallischen Körper und dem Keramikkörper.

Gemäß einer weiteren vorteilhaften Ausgestaltung der Erfindung liegt die Schmelztemperatur des Lots zwischen 700 und 1000 Grad Celsius. Ein derartiges Lot ist dann besonders gut geeignet zum Herstellen einer hochwertigen Hartlötverbindung zwischen dem Keramikkörper und dem metallischen Körper.

Gemäß einer weiteren vorteilhaften Ausgestaltung der Erfindung ist der elektrische Leiter in dem Keramikkörper mittels einer Hartlötverbindung hochdruckdicht befestigt. Dies ist einfach herstellbar und auch in einem gemeinsamen Prozessschritt mit der Hartlötverbindung zwischen dem Keramikkörper und dem metallischen Körper herstellbar.

Gemäß einer weiteren vorteilhaften Ausgestaltung der Erfindung ist in dem metallischen Körper eine ringförmige Nut radial außerhalb der Ausnehmung ausgebildet. Falls die Nut mit einem Medium beaufschlagt ist, das auch auf den Keramikkörper einwirkt, kann bei hohen Drücken des Mediums eine Stabilisierung der hochdruckdichten Hartlötverbindung auf diese Weise erfolgen und so eine höhere Robustheit der hochdruckfesten Durchführung gewährleistet werden.

Gemäß eines weiteren Aspekts zeichnet sich die Erfindung aus durch einen Injektor mit einem Gehäuse, das den metallischen Körper gemäß der Erfindung oder der angegebenen vorteilhaften Ausgestaltungen bildet und das eine Gehäuseausnehmung umfasst, in der ein Festkörperaktuator angeordnet ist. Der Leiter ist elektrisch gekoppelt mit dem Festkörperaktuator. Dies ermöglicht, dass der Festkörperaktuator von Fluid umspült sein kann, das unter hohem Druck steht.

Ausführungsbeispiele der Erfindung sind im folgenden anhand der schematischen Zeichnungen näher erläutert. Es zeigen:
- Figur 1: eine Schnittdarstellung eines Injektors,
- Figur 2: eine Draufsicht auf einen metallischen Körper und
- Figur 3: einen Schnitt längs einer Linie III III' des metallischen Körpers gemäß der Figur 2.

Elemente gleicher Konstruktion oder Funktion sind figurenübergreifend mit den gleichen Bezugszeichen gekennzeichnet.

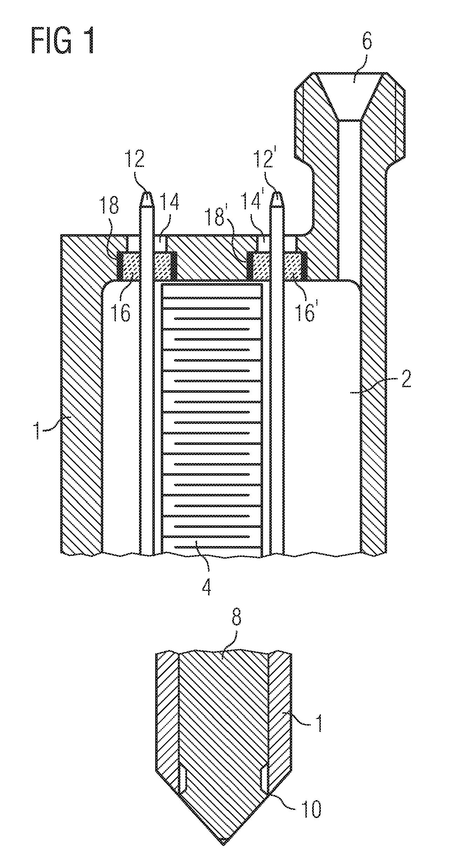

Ein Injektor (Figur 1), der auch als Einspritzventil bezeichnet werden kann, hat ein Gehäuse 1, das einstückig, jedoch regelmäßig auch mehrstückig ausgebildet sein kann. Das Gehäuse 1 weist eine Ausnehmung 2 auf, in die ein Festkörperaktuator 4 eingebracht ist. Darüber hinaus ist ein Kopplungselement 6 ausgebildet zum Koppeln des Injektors mit einer Kraftstoffzuführung. Allgemein kann der Injektor auch mit einer Fluidzuführung gekoppelt sein, bevorzugt handelt es sich bei dem Fluid jedoch um Kraftstoff. Typischerweise ist die Kraftstoffzuführung als eine Hochdruck-Kraftstoffzuführung, bevorzugt als ein so genanntes Common rail, ausgebildet.

Der Festkörperaktuator 4 kann beispielsweise als ein Piezzo-Aktuator oder auch ein anderer dem Fachmann für diese Zwecke bekannter Festkörperaktuator 4 ausgebildet sein. Der Festkörperaktuator 4 ist wirkverbunden mit einer Düsennadel 8. Die Düsennadel 8 ist so ausgebildet und angeordnet, dass sie in ihrer Schließposition eine Einspritzdüse 10 verschließt und so einen Fluidfluss durch die Einspritzdüse unterbindet. Au-ßerhalb der Schließposition gibt sie die Einspritzdüse 10 frei und ermöglicht somit einen Fluidfluss durch die Einspritzdüse. Das Fluid strömt von dem Kopplungselement 6 hin zu der Einspritzdüse 10. Bevorzugt ist der Festkörperaktuator 4 mechanisch gekoppelt mit der Düsennadel 8. Dies kann beispielsweise mittelbar über eine Hebelvorrichtung erfolgen, durch die zum einen der Hub des Festkörperaktuators verstärkt werden kann und zum anderen auch eine Hubumkehr erfolgen kann. Darüber hinaus kann beispielsweise auch ein hydraulisches Ausgleichselement zwischen den Festkörperaktuator 4 und die Düsennadel 8 geschaltet sein. Der Festkörperaktuator 4 kann auch hydraulisch gekoppelt sein mit der Düsennadel 8.

Das während des Betriebs des Injektors unter Hochdruck stehende Fluid umspült zumindest teilweise auch den Festkörperaktuator 4, der somit auch mit Hochdruck beaufschlagt ist.

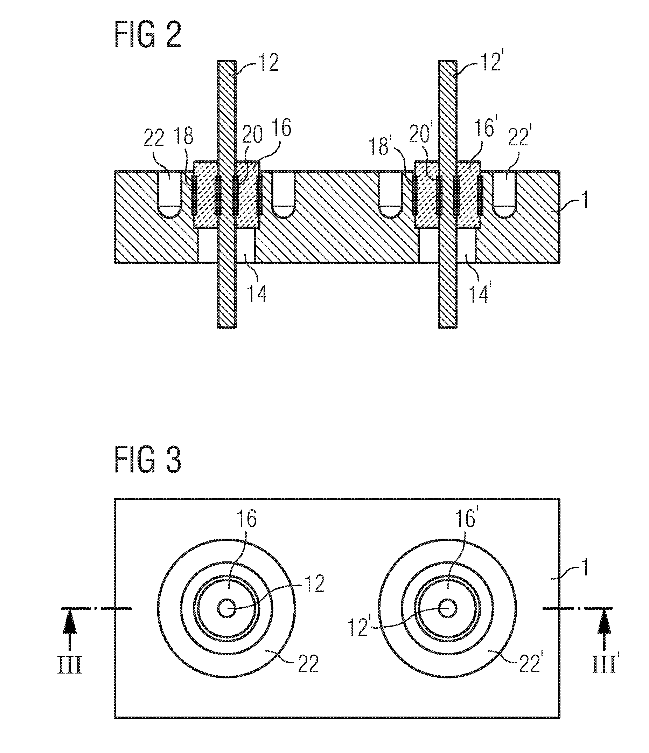

Zum Ansteuern des Festkörperaktuators 4 sind elektrische Leiter 12, 12' vorgesehen, die elektrisch leitend mit Polen des Festkörperaktuators 4 verbunden sind. Zum Durchführen der elektrischen Leiter 12, 12' sind Ausnehmungen 14, 14' des Gehäuses 1 zum Durchführen der elektrischen Leiter 12, 12' vorgesehen, die nachfolgend auch als Durchführungsausnehmung bezeichnet sind. Die Durchführung der elektrischen Leiter 12, 12' ist im folgenden näher anhand der Figuren 2 und 3 erläutert.

In den Figuren 2 und 3 ist allgemein ein metallischer Körper dargestellt. Im bevorzugten Ausführungsbeispiel bildet der metallische Körper das Gehäuse 1 des Injektors. Der metallische Körper kann jedoch auch ein beliebiger anderer metallischer Körper sein und kann so zum Beispiel Teil einer Sensorvorrichtung sein, die einseitig mit einem unter hohem Druck stehenden Medium beaufschlagt ist und eine entsprechende Durchführung aufweist. Beispielhaft wird nun der metallische Körper anhand seines Einsatzes als Gehäuse 1 des Injektors näher erläutert. Die Erläuterungen sind jedoch ebenso auf einen beliebigen anderen metallischen Körper anwendbar.

Das Gehäuse 1 weist die Durchführungsausnehmungen 14, 14' auf. In die Durchführungsausnehmungen 14, 14' ist ein Keramikkörper 16, 16' eingebracht. Der Keramikkörper 16, 16' umfasst bevorzugt eine Oxidkeramik.

Oxidkeramiken zeichnen sich zum einen dadurch aus, dass sie einen sehr hohen elektrischen Isolationswiderstand aufweisen, dass sie einen Wärmeausdehnungskoeffizienten haben, der regelmäßig denjenigen von Metallen, insbesondere von Stahl sehr ähnlich ist. Darüber hinaus zeichnen sich Oxidkeramiken auch durch geeignete mechanische Eigenschaften für eine hochdruckfeste Durchführung des elektrischen Leiters 12,12' durch die Durchführungsausnehmungen 14, 14' aus. Im Hinblick auf die mechanischen Eigenschaften ist beispielsweise die Elastizität, die Härte, die Biegesteifigkeit oder auch die offene Porosität zu erwähnen. Als Oxidkeramiken können beispielsweise Aluminium-Oxidkeramiken, mit einem Aluminium-Oxid-Anteil kleiner 90 Prozent, einem Aluminium-Oxid-Anteil zwischen 90 Prozent und 96 Prozent, zwischen 96 Prozent und 99 Prozent oder auch größer als 99 Prozent eingesetzt werden.

Besonders bevorzugt wird als Oxidkeramik eine Keramik eingesetzt, die Zirkonoxid umfasst, so zum Beispiel eine Oxidkeramik mit Aluminium-Oxid und einer Verstärkung durch Zirkonoxid. Darüber hinaus kann besonders bevorzugt auch ein Teil stabilisiertes Zirkonoxid eingesetzt werden.

Der mittlere Längenausdehnungskoeffizient liegt bei derartigen Oxidkeramiken beispielsweise zwischen 6 und 13 x 10⁻⁶/K, bei den besonders bevorzugt eingesetzten Oxidkeramiken, die Zirkonoxid umfassen, liegt er typischerweise zwischen 9 und 13 x 10⁻⁶/K und somit sehr nahe an dem thermischen Ausdehnungskoeffizienten von Stahl. Dadurch kann gewährleistet werden, dass auch bei hohen Temperaturschwankungen im Bereich des Injektors keine großen mechanischen Spannungen zwischen dem Keramikkörper und dem Gehäuse auftreten.

Der Keramikkörper ist bevorzugt mittels einer Hartlötverbindung 18, 18' in der Ausnehmung 14, 14' fixiert und mit dem Gehäuse 1 verbunden. Als Lot zum Herstellen der Hartlotverbindung, 18, 18' wird bevorzugt ein Lot eingesetzt auf Silber- und Titan-Basis, bevorzugt auf Silber-, Kupfer-, Titan-basis.

Bevorzugt beträgt die Schmelztemperatur des Lots in etwa zwischen 700 und 1000 Grad Celsius. Typischerweise liegt die optimale Löttemperatur, je nach Zusammensetzung des Lots in etwa zwischen 850 und 1050 Grad Celsius.

Das Lot kann beispielsweise eine Zusammensetzung in Gewichtsprozent von 72,5% Silber, 19,5% Kupfer, 5% Indium und 3% Titan aufweisen. Es kann beispielsweise auch eine Zusammensetzung von 96% Silber und 4% Titan aufweisen. Es kann ferner beispielsweise eine Zusammensetzung von 70,5% Silber, 26,5% Kupfer und 3% Titan aufweisen. Es kann ferner beispielsweise eine Zusammensetzung von 64% Silber, 34,2% Kupfer und 1,8% Titan aufweisen. Es kann ferner beispielsweise eine Zusammensetzung von 64,8% Silber, 25,2% Kupfer und 10% Titan aufweisen.

Als Lötatmosphäre zum Herstellen der Hartlötverbindung 18, 18' wird bevorzugt reines Argon oder Vakuum eingesetzt. Die Hartlötverbindung 18, 18' ist radial umlaufend um die Durchführungsausnehmungen 14, 14' ausgebildet und bildet somit eine hochdruckdichte Verbindung.

Darüber hinaus ist bevorzugt der jeweilige elektrische Leiter 12, 12' ebenfalls mittels einer weiteren Hartlötverbindung 20, 20' mit dem jeweiligen Keramikkörper 16, 16' hochdruckdicht verbunden. Die weitere Hartlötverbindung 20, 20' ist radial umlaufend um den jeweiligen Leiter 12, 12' ausgebildet und als Lot wird bevorzugt das gleiche Lot wie für die Hartlötverbindung 18, 18' eingesetzt. Beim Herstellen des metallischen Körpers können die Hartlötverbindungen 18, 18' und 20, 20' bevorzugt in einem Prozessschritt hergestellt werden.

Alternativ kann jedoch beispielsweise auch die hochdruckdichte Verbindung zwischen dem Keramikkörper 16, 16' und dem elektrischen Leiter 12, 12' dadurch realisiert sein, dass der Keramikkörper 16, 16' im Rahmen eines Sintervorganges auf den jeweiligen elektrischen Leiter 12, 12' aufgebracht ist.

Zur höheren Robustheit im Hinblick auf die hochdruckfeste Durchführung des jeweiligen Leiters 12, 12' ist jeweils bevorzugt eine Nut 22, 22' radial außerhalb der jeweiligen Durchführungsausnehmungen 14, 14' in dem Gehäuse 1 ausgebildet und zwar auf derjenigen Seite, die mit dem unter Hochdruck stehenden Fluid beaufschlagt ist oder einem sonstigen, unter Hochdruck stehendem Medium beaufschlagt ist. Durch die ringförmig ausgebildete Nut 22, 22' wird durch das während des Betriebs des Injektors in dieser befindliche unter Hochdruck stehende Fluid eine radial nach innen wirkende Kraft ausgeübt, die mit zunehmendem Druck des Fluids auch zunimmt. Auf diese Weise kann so eine höhere Stabilität der Durchführung des elektrischen Leiters 12, 12' im Hinblick auf die Hochdruckfestigkeit erreicht werden.

## Patentansprüche

1. Metallischer Körper mit einer Ausnehmung (14, 14'), durch die ein elektrischer Leiter (12, 12') geführt ist, wobei der elektrische Leiter (12, 12') durch einen Keramikkörper (16, 16') geführt ist, der mittels einer Hartlötverbindung (18, 18') hochdruckdicht in der Ausnehmung (14, 14') befestigt ist.

2. Metallischer Körper nach Anspruch 1, bei dem der Keramikkörper (16, 16') eine Oxidkeramik umfasst.

3. Metallischer Körper nach Anspruch 2, bei dem der Keramikkörper (16, 16') Zirkonoxid umfasst.

4. Metallischer Körper nach einem der vorstehenden Ansprüche, bei dem die Hartlötverbindung (18, 18') ein Lot umfasst, das Silber und Titan umfasst.

5. Metallischer Körper nach einem der vorstehenden Ansprüche, bei denen das Lot Kupfer umfasst.

6. Metallischer Körper nach einem der Ansprüche 4 oder 5, bei dem die Schmelztemperatur des Lots zwischen 700 und 1000 Grad Celsius liegt.

7. Metallischer Körper nach einem der vorstehenden Ansprüche, bei dem der elektrische Leiter (12, 12') in dem Keramikkörper (16, 16') mittels einer Hartlötverbindung (20, 20') hochdruckdicht befestigt ist.

8. Metallischer Körper nach einem der vorstehenden Ansprüche, bei dem in dem metallischen Körper eine ringförmige Nut (22, 22') radial außerhalb der Ausnehmung (14, 14') ausgebildet ist.

9. Injektor mit einem Gehäuse (1), das einen metallischen Körper gemäß einem der vorstehenden Ansprüche bildet und das seine Gehäuseausnehmung umfasst, in der ein Festkörperaktuator (4) angeordnet ist, wobei der elektrische Leiter (12, 12') elektrisch gekoppelt ist mit dem Festkörperaktuator (4).
